(19)

**Europäisches Patentamt**
**European Patent Office**
**Office européen des brevets**

(11) **EP 4 746 282 A1**

(12) **EUROPEAN PATENT APPLICATION**

(43) Date of publication:
20.05.2026 Bulletin 2026/21

(21) Application number: 24213685.1

(22) Date of filing: 18.11.2024

(51) International Patent Classification (IPC):
*H02P 21/00* $^{(2016.01)}$  *H02P 21/22* $^{(2016.01)}$
*H02P 21/16* $^{(2016.01)}$

(52) Cooperative Patent Classification (CPC):
**H02P 21/22; H02P 21/0003; H02P 21/16;**
H02P 2205/01

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Polestar Performance AB**
**405 31 Gothenburg (SE)**

(72) Inventors:
• **HOFWIMMER, Rasmus**
**413 16 Göteborg (SE)**
• **HU, Yifei**
**417 62 Göteborg (SE)**
• **LAURELL, Jakob**
**422 51 Hisings Backa (SE)**

(74) Representative: **Zacco Sweden AB**
**P.O. Box 5581**
**Löjtnantsgatan 21**
**114 85 Stockholm (SE)**

(54) **A METHOD FOR CONTROLLING AN ELECTRIC MACHINE**

(57) The present disclosure relates to a method (100) for controlling an electric machine comprising the steps of determining (101), for a d-axis and a q-axis of the electric machine, a current error of the electric machine. Further, the method (100) comprises the steps of providing (102) the current error to a current controller of said electric machine, wherein the current controller is a FOC current controller. Moreover, the method (100) comprises the step of determining (103), in the current controller, for said d-axis and said q-axis, PI, parameters. The PI parameters comprising a proportional gain value and an integral gain value. Furthermore, the method (100) comprises controlling (104) said electric machine based on said PI parameters to adapt the current.

Figure 1

**EP 4 746 282 A1**

**Description**

TECHNICAL FIELD

The present disclosure relates to a method for controlling an electric machine and a current controller for an electric machine.

BACKGROUND

In electric machines, a fast and precise current control is essential to maintain the desired torque and speed under varying load conditions. By ensuring instantaneous torque response, electric vehicles (EVs) can offer smooth acceleration and deceleration, enhancing the driving experience and safety. This precise control also plays a vital role in optimizing energy efficiency, extending the vehicle's range by reducing unnecessary power losses. Overall, the ability to quickly and accurately manage current is key to maximizing the performance, safety, and range of electric vehicles.

Currently, there are methods for achieving current control efficiently. However, these methods are not feasible when it comes to practical application. One example is the deadbeat predictive current control (DPCC) technique. The method is a control technique where, in one sample, you predict the current based on the claim that the next current is the reference, hence convergence will be achieved in one sample. The DPCC method is characteristically desirable but problematic to implement practically. One reason for the cumbersome practical implementation of the DPCC method in a current controller of an electric machine is that the method would place an excessive computational burden on the current controller.

Accordingly, there is a need for an improved method for controlling the current of an electric machine of an electric vehicle efficiently.

SUMMARY

It is therefore an object of the present disclosure to alleviate at least some of the mentioned drawbacks to provide a method for controlling an electric machine. Further, the present disclosure provides a current controller.

The present disclosure is at least partly based on the insight that the method herein is more efficient compared to conventional methods as utilized in a state of art current controller. The disclosed method in the present disclosure advantageously provides fast response and accuracy in current control for an electric machine without excessively affecting computational load of the current controller, which also provides improved dynamic characteristics for a commonly known current controller.

The present disclosure relates to a method for controlling an electric machine comprising the steps of determining, a current error of the electric machine, the current error being based on a difference between a reference current and a measured current of the electric machine. The reference current may be a current set value/point that is derived from a controller, or from a look-up table, or directly from a command. The reference current may be a DC current, it may be a d-axis current or a q-axis current. The measured current may be an actual current (measured by e.g. a sensor device) and may be based on the measured current flowing through e.g. coils of a stator of the electric machine. The measured current may be a DC current converted from an AC current. The current error may be a deviation of current value between the measured current and the reference current. The method further comprises the step of providing the current error to a current controller of said electric machine. The current controller may be configured to determine (may include select/apply/receive) PI parameters to adapt the current control. The current controller may comprise proportional-integral model, PI model, utilizing the PI parameters for regulating the current. The input to the current controller is regulated by the PI model to reach the level of the reference current as quick as possible. In more detail, the current controller may be configured to utilize a feedback current loop and the PI parameters to reduce or remove the current error in an iterative manner. The current control method ensures the current controller regulate the input to the same value as the reference current in very short response time, e.g. at $\mu$s to ms level. This method and the current controller thus improve the efficiency and dynamic characteristics of the current control of the electric machine. Moreover, the method comprises determining, for the current controller, PI parameters, said PI parameters comprising a proportional gain value, $K_p$ and an integral gain value, $K_i$. Moreover, the method comprises the step of controlling said electric machine by using said current controller utilizing said PI parameters and the current error.

Advantageously, the method allows the current control to operate with quick dynamic response, while maintaining computational efficiency. This may also reduce hardware costs for controlling an electric machine with present method and present current controller.

The PI parameters may be determined based on inductance-resistance characteristics of windings of said electric machine. The windings may, in case the method is implemented for a permanent magnet synchronous motor (PMSM) be windings of a stator.

An advantage of determining PI parameters based on inductance-resistance characteristics of said windings is that it will simplify the method for optimizing the PI-gain expression and increase accuracy. The method may reduce computational load of the processor executing the method in real time while allowing for efficient parameter control.

In some aspects, the $K_p$ value may be determined based on an function in which the $K_p$ value may be dependent on the electric machine winding resistance, R, electric machine winding inductance/stator inductance, L, a sampling parameter, $P_{cs}$ and a tuning parameter, $K_c$.

In some aspects, the $K_i$ value may be determined based on an function in which the $K_i$ value is dependent on R, $P_{cs}$, $K_c$.

It is specifically advantageous if the $K_p$ and $K_i$ values are determined based on the aforementioned dependencies, as $K_c$, $P_{cs}$, R and L can be utilized both for determining $K_p$ and $K_i$, thereby more simply and efficiently to derive the PI parameters (as common parameters may be used for both $K_p$ and $K_i$).

$K_c$ may be a pre-determined constant. Accordingly, $K_c$ may be tuned/decided one time and then be constant for all operating states of the current controller. Accordingly, the computational burden will be reduced further from the current controller as $K_c$ may be a pre-tuned unchanged/static/fixed constant for all operating states of the current controller. $K_c$ may be any suitable constant, e.g. an integer.

In some aspects, said $K_p$ value may be based on a function $f(P_{cs}, L, R)$, and

$$f(P_{cs}, L, R) = \left(\frac{L}{P_{cs}} - \frac{R}{2}\right) K_c,$$

In some aspects, said $K_p$ value may be determined according to equation:

$$K_p = \left(\frac{L}{P_{cs}} - \frac{R}{2}\right) K_c.$$

Moreover, in some aspects, said $K_i$ value may be based on a function $f(Pcs, R)$, and

$$f(P_{cs}, R) = \left(\frac{R}{P_{cs}}\right) K_c.$$

Moreover, in some aspects, said $K_i$ value may be determined according to equation: $K_i = \frac{R}{P_{cs}} K_c$ .

Accordingly, the $K_p$ and $K_i$ values may be determined based on the aforementioned functions e.g. a manipulation or transformation of the expressions or explicitly by utilizing said equations.

Advantageously, the functions utilize few parameters which are convenient to attain. For example, R and L may be derived by hardware specification or measured by sensor devices. Further, $K_c$ may be pre-determined/fixed/pre-tuned. Therefore, a rapid, efficient, flexible method is provided.

The sampling parameter, $P_{cs}$, may be derived based on a sampling time, $T_s$ or a switching frequency, $f_s$, of an inverter of said electric machine. Furthermore, when based on the switching frequency, $f_s$, the sampling parameter may be a crossover angular frequency, $\omega_{ci}$. A switching frequency, $f_s$ may have a relation with a crossover angular frequency expressed as $\omega_{ci} = 2\pi * f_s/n$, n being an integer, preferably 10. The crossover frequency may be about 1/10 of the switching frequency.

Advantageously, this allows the current controller to operate with stability in all speed, torque and frequency regions. Hence, even if switching frequency is altered, the PI parameters will take this into account as they are dependent on switching frequency of said inverter.

The crossover angular frequency $\omega_{ci}$, may also be expressed as a pre-determined fraction of a switching frequency of said inverter, wherein the fraction is based on a presumption that a maximum crossover frequency $f_{ci}$ is at approximately 1/10 of the switching frequency $f_s$. The inverter switching frequency may vary as appreciated by a skilled person in the art. For example, the switching frequency may be between 2 kHz to 100 KHz.

In some aspect, the method may comprise using the current controller, utilizing PI parameters, $K_p$, $K_i$ and the current error $I_e$ to determine a voltage setpoint $U_{set}$ to control the electric machine, said voltage setpoint $U_{set}$ may be derived based on expression:

$$I_e * (K_p + (K_i / s)$$

wherein $U_{set}$ is the voltage setpoint, $I_e$ is the current error and s is a Laplace complex variable. The $U_{set}$ may be also derived based on a predetermined feed forward voltage value in combination of above-mentioned expression. A feed forward voltage is commonly used to improve the output dynamics of the current controller.

The voltage setpoint may be referred to as a control signal that determines the voltage applied to control the behaviour of the electric machine, e.g. to operate the electric machine's actual current to reach the reference current value.

The step of controlling may be performed by use of an inverter which controls voltage output to the electric machine. The voltage setpoint may be based on a DC voltage value to be input to an inverter, which thereby is inverted to an AC voltage to control the electric machine.

The inverter may comprise suitable modules and components for performing the method according to any aspect herein.

Moreover, the current controller herein may be a current controller associated with/utilizing a field-oriented control (FOC) method. The current error may be a d-axis current error or a q-axis current error of an electric machine. The FOC current controller may comprise a PI model for each one of the d-axis current and q-axis current. Furthermore, $K_p$ and $K_i$ may be determined for both d-axis and q-axis such that $K_{pd}$, $K_{pq}$, $K_{id}$, $K_{iq}$ are derived. The PI parameters for d-axis may be different to q-axis, depending on the different inductance-resistance characteristics, e.g. different R, L value for d-axis and q-axis.

Moreover, the current controller herein may be a single-parameter tuned FOC current controller. The single-parameter may be $K_c$. The single-parameter tuned FOC current controller provides more convenience and efficiency in current controlling.

The present disclosure further relates to a current controller for an electric machine, wherein the current controller is configured to determine, a current error of said electric machine, the current error being based on a difference between a reference current and a measured current of the electric machine. Further, the current controller is configured to determine, a set of PI parameters, for adapting the voltage output of the current controller. Accordingly, the current controller is configured to determine said PI parameters, said PI parameters comprising a proportional gain value, $K_p$ and an integral gain value, $K_i$. The PI parameters may be utilized by a PI model to obtain a current. Moreover, the current controller is configured to provide an output of the current controller, based on said PI parameters and the current error, said output may be a voltage setpoint derived therefrom, to obtain a voltage for controlling the electric machine.

The current error therein may be a d-axis current error or a q-axis current error of an electric machine. The FOC current controller may comprise a PI model for each one of the d-axis current and q-axis current. Furthermore, $K_p$ and $K_i$ may be determined for both d-axis and q-axis such that $K_{pd}$, $K_{pq}$, $K_{id}$, $K_{iq}$ are derived. The PI parameters for d-axis and q-axis may be different parameters depending on the different inductance-resistance characteristics, e.g. different R, L value for d-axis and q-axis.

The current controller provides at least similar advantages as the method herein. To avoid undue repetition, the advantages thereof are not further elaborated upon.

The present disclosure further relates to an electric machine control system comprising the current controller according to any aspect herein. The electric machine control system may also comprise an inverter, and a pair transforming modules for enabling the current controller to operate value from a rotating reference frame. A transforming module may refer to the modules that are known to the person skilled in the art, e.g. Clarke/Park transforming modules mm.

The current controller may provide the output signal, e.g. a DC voltage setpoint to a DC machine, DC-DC converter, or rotor of an electrically excited synchronous machine. Alternatively,. the voltage setpoint may be a D/Q voltage value transformed to an AC voltage to control the electric machine. When a FOC current controller is mentioned, it may provide a d-axis and a q-axis voltage setpoints. The voltage setpoints may be provided from an inverter to output a three phase AC voltage for controlling the electric machine, such as a PMSM or other type of AC electric machine. The current controller may utilize said PI parameters for regulating a rectified or converted current to charge an electric power unit.

The inverter may comprise suitable modules and components for performing the method according to any aspect herein.

Further, the present disclosure relates to an electric machine control system (may also be referred to as an electric drive system) comprising the current controller and/or inverter of any aspect herein. In some aspects, the current controller may be implemented as a software module within said electric machine control system, e.g., on a storage medium in the inverter. The current controller may be implemented in a separate control device which connected to an inverter thereafter. The inverter may be a device connected between the battery pack of an electric vehicle and the electric machine. The inverter may be configured to control speed and torque of the electric machine. The inverter may comprise switching and control components operable to e.g. convert direct current to alternating current.

## BRIEF DESCRIPTION OF THE DRAWINGS

These and other features and advantages of the present disclosure will now be further clarified and described in more detail, with reference to the appended drawings, in which;

Figure 1    schematically illustrates an electric machine control system in accordance with some aspects of the present disclosure;

Figure 2    schematically illustrates a current controller in accordance with some aspects of the present disclosure; and

Figure 3    schematically, in the form of a flowchart, illustrates a method for controlling an electric machine in accordance with some aspects of the present disclosure.

DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

The term "electric machine" (E-machine) refers to electromechanical power converting machines, such as electric motors or electric generators. The type of electric motor or the electric generator maybe any type that commonly known to the person skilled in the art.

The term DC used herein may refer to direct current, the term AC may refer to alternating current.

The term "d-axis" and "q-axis" or "d-q values" used in the present disclosure may generally refer to the direct axis and the quadrature axis and are terms commonly used in motor control techniques, such as field-oriented control (FOC).

In geometric terms, the d-axis and q-axis can be seen as a two dimensional representation of the flux contributed by the three separate sinusoidal phase quantities of a three-phase motor. The d-axis is the axis by which flux is produced. The q-axis, or the quadrature axis is the axis on which torque is produced. The d-axis and q-axis are perpendicular to each other. Thus, the q-axis is 90 degrees out of phase with the d-axis. In simplistic terms, the d-axis is the main flux direction of the rotor, while the q-axis is the main torque producing direction.

Accordingly, the current in the electric machine herein may therefore be transformed into the d-q reference frame, allowing the current controller to manipulate and control the torque and flux components independently.

The term "switching frequency" may refer to the rate at which power electronic switches (e.g. transistors etc.) in an inverter turn on and off.

The term "sampling time" may refer to a time interval between successive measurements of the current and/or the corresponding updates of the control signals. The sampling time may in some aspects be chosen to be the same as the switching period (1/switching frequency.

The terms "electric machine winding resistance" may refer to the electrical resistance of the conductive material that are used in the windings of stator and/or rotor. The electric machine winding resistance may be common for both d-axis and q-axis of the stator or rotor.

The terms "electric machine winding inductance" may refer to the inductance of the windings in the electric machine's stator and/or rotor. The electric machine winding inductance may be different for the d-axis and the q-axis. Accordingly, in the method herein, $L_d$ (d-axis inductance) and $L_q$ (q-axis inductance) may be pre-determined/calculated.

The term "inductance-resistance characteristics" may refer to the electric properties of the windings (e.g. stator windings) such as the inherent resistivity of the material of the windings and the inductance of the machine windings (e.g. inductance within each single winding and/or inductance between different windings or phases).

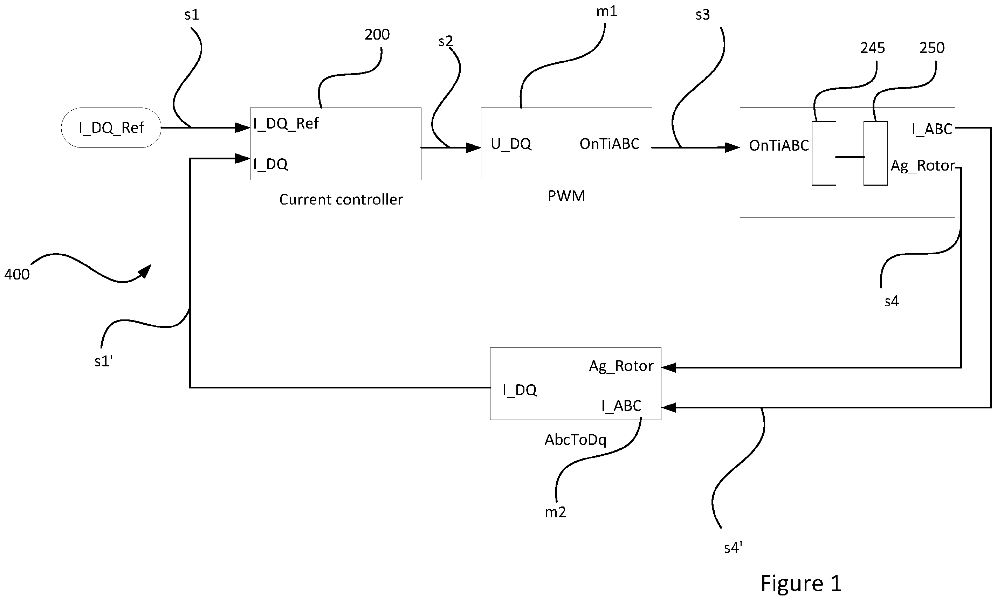

Figure 1 schematically illustrates an electric machine control system 400. The electric machine control system 400 comprising a current controller 200, an inverter 245 and an electric machine 250. In some aspects, the current controller 200 may be a software-module within the inverter 245 while the inverter 245 and electric machine 250 are hardware parts as appreciated by a skilled person in the art. The current controller 200 exemplified in Figure 1, is a field-oriented current controller, the current controller 200 being configured to determine, for a d-axis and a q-axis of the electric machine 250, a current error of said electric machine for each of the d-axis and q-axis, the current error being based on a difference between a reference current and an measured current of the electric machine. The term "determine a current error" may refer to that the current controller 200 is provided/directly receives the current error as e.g. a value from another module or unit, or that the current controller 200 calculates and determines the current error. The reference current may be a DC current. The reference current may be a current input from a power source, such as an electric battery. The reference current may be provided as a d-axis reference current and a q-axis reference current. The measured current is representing an actual current that is measured by suitable means connected to the electric machine or inverter. The measured current may be input to the current controller or input to a unit for being compared with the reference current to derive a current error. The measured current may be a DC current that has been Clark/Park transformed from an AC current, such as the AC current driving the electric machine. The measured current thus may comprise a d-axis current and a q-axis current. The d-axis reference current is compared with the d-axis measured current to derive the current error for d-axis, and the q-axis reference current is compared with the q-axis measure current to derive the current error for q-axis. The current errors of d-axis and q-axis are thus provided to the current controller. It is within the knowledge of a person skilled in the art, in another exemplified current controller, there may be one DC current to be regulated based on said method utilizing PI parameters and a current error for controlling a DC voltage to an Electric machine, e.g. a DC motor.

Moreover, in figure 1, the current controller 200 is configured to determine, a set of PI parameters, for adapting/regulating the current. The current controller may comprise a PI model for utilizing the PI parameters to regulate the current. Further, the current controller 200 is configured to determine, for said d-axis and said q-axis, said PI parameters, said PI parameters comprising a proportional gain value, $K_p$ and an integral gain value, $K_i$ for each one of said d-axis and q-axis. Moreover, the current controller 200 is configured to control the electric machine based on utilizing said PI parameters and the current errors. The current controller is configured to provide an output, for each one of said d-axis current and q-axis current. The output of the current controller 200 may be provided towards the electric machine 250 as an input so to allow the current/voltage applied to the electric machine 250 to allow the electric machine 250 to generate torque as requested. The term "provide an output" may refer to that the current controller 200 provides/transmits an output subsequently to the step of utilizing the PI parameters to regulate the current. The output may be a control signal based on the parameters. Accordingly, the current controller 200 may be referred to as a feedback current controller which is operable to continuously control the current of the electric machine 250 based on its output. The current controller 200 may be a FOC current controller with feedback loop which operates based on the PI (proportional-integral) model and current error provided to the current controller 200.

Generally, the current controller 200 may be operable based on the following expression to provide an output signal u(t):

$$K_p * I_e(t) + K_i \int_0^t Ie(t)\, dT$$

u(t) being the control signal, e.g. an output voltage at a time t, e(t) being the current error at time t and $\int_0^t e(t)$ representing the integral of the error from time 0 to the time t. t may be a present time. The u(t) may be also derived based on a predetermined feed forward voltage value in combination of above-mentioned expression (a).

Accordingly, the control signal may be provided to an inverter 245 to control the electric machine 250.

The expression (a) may be simplified as: $I_e * (K_p + K_i/s)$ as appreciated by a skilled person in the art.

Thus u(t) may be expressed as a voltage setpoint $U_{set}$ (i.e. control signal) input to an inverter to control the electric machine.

The following will further elaborate upon an aspect of a flow of an exemplified operation of the current control system 400 of Figure 1. As illustrated in Figure 1, reference/desired current value of the electric machine 250, expressed in d-q values, may be provided to the current controller 200 as indicated by arrow s1. The desired current data may be determined based on e.g. user input, e.g. throttle input or a vehicle drive input.

The current controller 200 may further, as indicated by arrow s1', receive the measured current from the electric machine 250 and/or inverter in the form of d-q values. The measured d-axis current and q-axis current may be derived by Clarke/Park transformation. Based on these, the current controller 200 may utilize the PI-parameters and the current error to provide a control signal towards the inverter (hardware) 245. The control signal may be a voltage value expressed as a d-value and a q-value. The control signal may be adapted prior to being inputted as control values to the electric machine 250. Accordingly, the control signal may be adapted to be transformed from a rotating reference frame (i.e. having d-q values) to a three-phase reference frame, e.g. via inversed Clarke/Park transformation, as indicated by s2 in Figure 1, thereby allowing the control signal to be expressed as ABC current/voltage components corresponding to each phase of a three-phase electric machine. An advantage of configuring the current controller 200 to output a control signal in d-q values (comprising a q-value and a d-value) is that it enables the current controller 200 to operate more efficient during calculations.

Furthermore, as indicated by s3 in Figure 1, the control signal may be provided at an inverter 245 which may be configured to control switches therein in a manner that enables the electric machine 250 to operate in accordance with the reference input.

Accordingly, arrows s4 and s4' illustrate that the control system 400 is a feedback control system as the electric machine 250 and/or associated components may comprise sensor devices and other monitoring circuitry to measure the present three-phase current, along with present rotor angular position of the electric machine so to provide these values as a feedback d-q values towards the current controller 200 which may perform the steps s1-s3 again so to operate iteratively to minimize the current error in a short response period. The feedback model may increase the operating efficiency and robustness of the control system. As illustrated in Figure 1, the three-phase current may be measured as three-phase components (ABC), and may therefore be transformed into the rotating reference frame to derive a d-axis value and a q-axis value prior to being received by the current controller 200.

The modules which are responsible for transforming the d-q values into three phase values and three phase values into d-q-values may be referred to as transforming modules, e.g. Clarke/Park transformation. Accordingly, the system 400 may comprise a first transforming module m1, e.g. inversed Clarke/Park transforming module to ensure that the electric machine receives current/voltage values as values for being applied to adjust current/voltage of each corresponding phase and a second transforming module m2, e.g. Clarke/Park transforming module, so to ensure that the current controller 200 receives current values in d-q values so to comprise at least one d-axis value and at least one q-axis value of the electric machine 250. The first transforming module m1 may further comprise a pulse width modulator (PWM) or any other modulation module, alternatively the PWM may be a separate module providing output to the inverter.

Figure 1 further illustrates that the current controller 200 is connected to the inverter 245 of the electric machine 250. Accordingly, the electric machine 250 may receive the control signal directly from the inverter 245. The inverter 245 of Figure 1 may comprise other circuitry such as diodes, transistors and other switching /control components. Accordingly, the inverter 245 may be configured to, based on the control signal from the current controller 200 convert DC into alternating current (AC) and provide an amount of AC, for each phase, corresponding to the control signal, to the electric machine 250. The inverter 245 may, as appreciated by a skilled person in the art comprise other modules/units such as transistors (IGBT/MOSFET), diodes and gate drivers. Further, it should be noted that the system 400 may be connected to a power source such as a battery pack (which may be connected directly to the inverter 245) so to supply DC voltage (Volts) to the electric machine control system 400 to allow the system 400 to control the electric machine 250 (and the inverter 245) using said current controller 200 which utilizes the PI parameters.

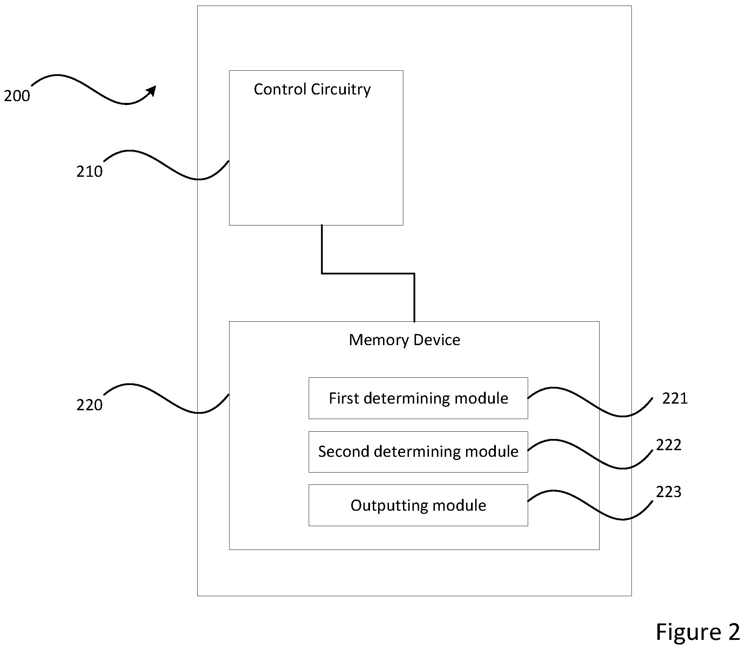

Figure 2 schematically illustrates the current controller 200 according to some aspects of the present disclosure, wherein the current controller 200 is a FOC controller. The term "FOC controller" may refer to a current controller which transform (e.g. stator) currents into a d-q frame.

Figure 2 illustrates that the current controller 200 may comprise control circuitry 210 and one or more memory devices 220. The control circuitry 210 may comprise, for example, one or more central processing units (CPUs), graphics processing units (GPUs) dedicated to performing calculations, and/or other processing devices. The control circuitry 210 may also comprise input/output interfaces (not shown) for e.g. receiving data from sensor devices and output control signals. The memory device(s) 220 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by each associated module 221-223. Each memory device 220 may store any suitable instructions, data or information, including a computer program, software, an application including one or more of logic, rules, code, tables, etc. and/or other instructions capable of being executed by e.g. control circuitry 210 and, utilized. Specifically, the memory device may comprise a first determining module 221, a second determining module 222 and an outputting module 223. The memory device 220 may store any instructions and/or programs that may carry out the method according to the disclosure herein. The instructions may be executed by the control circuitry 210. For example, the first determining module 221 may comprise instructions for determining current error of the electric machine. Further, the second determining module 222 may comprise instructions/programs for determining PI parameters and the outputting module 223 may comprise instructions for outputting control signals to adapt the current error. Accordingly, the control circuitry 210 may utilize the different modules 221-223 to output control signals to adapt the current error. In some embodiments, the memory device 280 may be considered to be integrated in the control circuitry. It should be noted that the current controller 200 (and/or one or more of the transforming modules m1, m2) in some aspects may be (software) modules/parts that are provided within the inverter 245, i.e. within control circuitry of the inverter 245. The inverter 245 may be referred to as inverter hardware/device and may comprise a power module, a gate driver (which may control transistor switches of power module to output three-phase voltage) and control circuitry.

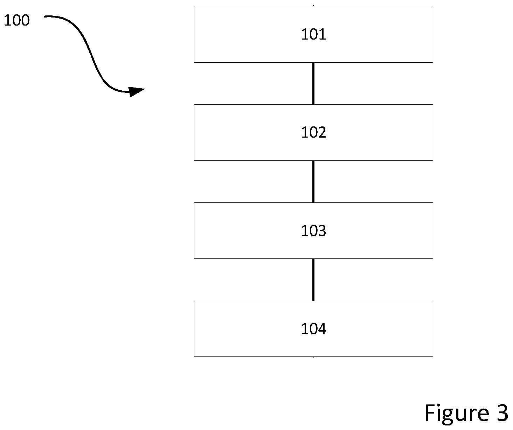

Figure 3 illustrates a schematic flowchart of a method 100 for controlling an electric machine comprising the steps of determining 101, a current error of the electric machine, the current error being based on a difference between a reference current and a measured current of the electric machine. Further, the method 100 comprises providing 102 the current error to a current controller of said electric machine. Moreover, the method 100 comprises the step of determining 103, for the current controller, PI, parameters, said PI parameters comprising a proportional gain value, $K_p$ and an integral gain value, $K_i$. Moreover, the method 100 comprises the step of controlling 104 said electric machine using said current controller utilizing said PI parameters and the current error.

The $K_p$ value may be determined based on a function in which the $K_p$ value is dependent on electric machine winding resistance, R, electric machine winding inductance, L, sampling parameter, $P_{cs}$ and a tuning parameter, Kc.

Further, the $K_i$ value may be determined based on a function in which the $K_i$ value is dependent on electric machine winding resistance, R, sampling parameter, $P_{cs}$ and a tuning parameter, $K_c$. Preferably, $K_c$ is a pre-determined constant. Accordingly, Kc may be a pre-tuned value adapted to work optimally for all states of the electric machine.

In more detail, the expression of $K_p$ may be expressed according to:

$$K_p = \frac{R e^{-\frac{R}{L}T}}{1 - e^{-\frac{R}{L}T}} \tag{1}$$

Using the definition of the power series in equation (2) below on the term $e^{-\frac{R}{L}T}$ in equation (1) it is possible to simplify (1):

$$e^x = \sum_{n=0}^{\infty} \frac{x^n}{n} = 1 + x + \frac{x^2}{2!} + \frac{x^3}{3!} ... \frac{x^n}{n!} \tag{2}$$

Selecting n=1 and n=2 it is possible to expand the term and get the following:

$$e^{-\frac{R}{L}T} \approx 1 - \frac{R}{L}T, \ (n = 1) \tag{3}$$

$$e^{-\frac{R}{L}T} \approx 1 - \frac{R}{L}T + \frac{\left(\frac{RT}{L}\right)^2}{2}, \ (n = 2) \tag{4}$$

Inserting simplifications into equation (1) yields:

$$K_p = \frac{L}{T} - R, \ (n = 1) \tag{5}$$

$$K_p = \frac{2L^2 - 2LRT + (RT)^2}{2LT - RT^2}, \quad (n = 2) \tag{6}$$

Comparing the real solution of $K_p$ in equation (1) with equations (4) and (5) it is possible to move closer to the real solution by introducing a simplification $\frac{R}{2}$. Which reduces the complexity of adding more terms of the power series and moves the solution closer to the real one described in equation (1).

Accordingly, the values on $K_p$ and $K_i$ may be expressed as the following:

$$K_p = \left(\frac{L}{T} - \frac{R}{2}\right) K_c \tag{7}$$

$$K_i = \frac{R}{T} K_c \tag{8}$$

$$G_c = K_p + \frac{K_i}{s} \tag{9}$$

$G_c$ expresses the transfer function. It should be noted that the step of controlling may be performed by use of e.g. the inverter 245 of Figure 1 which controls voltage output to the electric machine. The method 100 may be performed iteratively and continuously.

**Claims**

1. A method (100) for controlling an electric machine comprising:

   - determining (101), a current error of the electric machine, $I_e$, the current error being based on a difference between a reference current and a measured current of the electric machine;
   - providing (102) the current error to a current controller of said electric machine,
   - determining (103), for the current controller, proportional-integral, PI, parameters, said PI parameters comprising a proportional gain value, $K_p$ and an integral gain value, $K_i$
   - controlling (104) said electric machine by using said current controller utilizing said PI parameters and the current error.

2. The method (100) according to claim 1, wherein the PI parameters are determined based on inductance-resistance characteristics of windings of said electric machine.

3. The method (100) according to any one of the preceding claims, wherein the $K_p$ value is determined based on an function in which the $K_p$ value is dependent on:

   - electric machine winding resistance, R;
   - electric machine winding inductance, L;
   - sampling parameter, $P_{cs}$; and
   - a tuning parameter, $K_c$.

4. The method (100) according to any one of the preceding claims, wherein the $K_i$ values is determined based on an function in which the $K_i$ value is dependent on:

   - electric machine winding resistance, R;
   - sampling parameter, $P_{cs}$; and
   - a tuning parameter, $K_c$.

5. The method (100) according to any one of claims 4 and 5, wherein $K_c$ is a pre-determined constant.

6. The method (100) according to claim 4, wherein said $K_p$ value is determined based on function:

$$f(P_{cs}, L, R) = \left(\frac{L}{P_{cs}} - \frac{R}{2}\right) K_c .$$

7. The method (100) according to claim 5, wherein said $K_i$ value is determined based on function:

$$f(P_{cs}, R) = \left(\frac{R}{P_{cs}}\right) K_c .$$

8. The method (100) according to any of claims 4-7, wherein the sampling parameter, $P_{cs}$ is derived based a sampling time or a switching frequency of an inverter of said electric machine.

9. The method (100) according to claim 8 wherein the sampling parameter is derived based on a switching frequency $f_s$, which is a crossover angular frequency, $\omega_{ci}$. preferably, crossover angular frequency $\omega_{ci}$ is expressed as a pre-determined fraction of switching frequency of said inverter, wherein the fraction is based on a presumption that a maximum crossover frequency $f_{ci}$ is located at approximately 1/10 of the switching frequency $f_s$.

10. The method (100) according to any one of the preceding claims, wherein controlling the electric machine by using said current controller utilizing PI parameters and the current error, including determining a voltage setpoint $U_{set}$ by said current controller, based on expression:

$$I_e * (K_p + (K_i / s))$$

wherein $U_{set}$ is voltage setpoint, $I_e$ is current error and s is a Laplace complex variable.

11. The method (100) according to any one of the preceding claims, wherein the current error is a d-axis current error or a q-axis current error of an electric machine.

12. A current controller (200) for an electric machine, the current controller (200) being configured to:

- determine, a current error of said electric machine, the current error being based on a difference between a reference current and a measured current of the electric machine;
- determine, PI parameters, said PI parameters comprising a proportional gain value, $K_p$ and an integral gain value, $K_i$,
- provide an output from the current controller for controlling said electric machine by utilizing said PI parameters and the current error.

13. A current controller (200) according to claim 12, is a FOC current controller, wherein said current error is a d-axis current error or a q-axis current error.

14. The current controller (200) according to claim 12 or 13, is wherein the PI parameters are determined based on inductance-resistance characteristics of windings of said electric machine.

15. An electric machine control system (400) comprising the current controller (200) of claim 12-14.

EP 4 746 282 A1

I_DQ_Ref

s1

200

s2

m1

s3

245    250

I_DQ_Ref

I_DQ

Current controller

U_DQ    OnTiABC

PWM

OnTiABC    I_ABC

Ag_Rotor

s4

400

s1'

I_DQ

Ag_Rotor

I_ABC

AbcToDq

m2

s4'

Figure 1

EP 4 746 282 A1

200

210

Control Circuitry

Memory Device

220

First determining module 221

Second determining module 222

Outputting module 223

Figure 2

100

101

102

103

104

Figure 3

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/088673 A1 (NOMURA KEIGO [JP] ET AL) 23 March 2023 (2023-03-23) | 1,2,4,5, 7-15 | INV. H02P21/00 |
| Y | * Equations 1-13; | 3 | H02P21/22 |
| A | paragraph [0025] - paragraph [0067]; figures 1,2 * | 6 | H02P21/16 |
| | ----- | | |
| X | US 2016/181961 A1 (HOLMBURG DAVID [US] ET AL) 23 June 2016 (2016-06-23) | 1,2,4,5, 7-15 | |
| Y | * Equations 10-13; | 3 | |
| A | paragraph [0043] - paragraph [0104]; figures 1-4 * | 6 | |
| | ----- | | |
| Y | CN 117 895 844 A (SHENZHEN XHORSE ELECTRONICS CO LTD) 16 April 2024 (2024-04-16) | 3 | |
| A | * paragraph [0036] - paragraph [0074]; figure 3 * | 1,2,4-15 | |
| | ----- | | |
| A | US 2011/127933 A1 (SHIMADA ARINORI [JP] ET AL) 2 June 2011 (2011-06-02) | 10,11 | |
| | * Equations 2, 3; paragraph [0037] - paragraph [0039]; figures 1,2 * | | TECHNICAL FIELDS SEARCHED (IPC) |
| | ----- | | H02P |

The present search report has been drawn up for all claims

| Place of search | Date of completion of the search | Examiner |
|---|---|---|
| Munich | 15 April 2025 | Gospodinova, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 746 282 A1**

## ANNEX TO THE EUROPEAN SEARCH REPORT
## ON EUROPEAN PATENT APPLICATION NO.

EP 24 21 3685

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | | Publication date | Patent family member(s) | | Publication date |
|---|---|---|---|---|---|
| US 2023088673 | A1 | 23-03-2023 | CN | 115088182 A | 20-09-2022 |
| | | | DE | 112021001150 T5 | 01-12-2022 |
| | | | JP | 7287310 B2 | 06-06-2023 |
| | | | JP | 2021132512 A | 09-09-2021 |
| | | | US | 2023088673 A1 | 23-03-2023 |
| | | | WO | 2021166550 A1 | 26-08-2021 |
| US 2016181961 | A1 | 23-06-2016 | BR | 102015032076 A2 | 02-08-2016 |
| | | | CN | 105720883 A | 29-06-2016 |
| | | | DE | 102015225462 A1 | 23-06-2016 |
| | | | GB | 2534283 A | 20-07-2016 |
| | | | US | 2016181961 A1 | 23-06-2016 |
| CN 117895844 | A | 16-04-2024 | NONE | | |
| US 2011127933 | A1 | 02-06-2011 | CN | 102577093 A | 11-07-2012 |
| | | | DE | 112010003370 T5 | 20-09-2012 |
| | | | JP | 5035641 B2 | 26-09-2012 |
| | | | JP | 2011120322 A | 16-06-2011 |
| | | | US | 2011127933 A1 | 02-06-2011 |
| | | | WO | 2011065165 A1 | 03-06-2011 |

EPO FORM P0459

For more details about this annex : see Official Journal of the European Patent Office, No. 12/82